# EUROPEAN PATENT APPLICATION

(11) **EP 2 552 163 A1**
(43) Date of publication of application: **30.01.2013**
(21) Application number: 10852760.7
(22) Date of filing: 15.10.2010
(51) Int. Cl.: H04W 68/00

(54) **DATA TRANSMISSION METHOD, USER EQUIPMENT AND BASE STATION**

(30) Priority: 09.06.2010 CN 201010199448
(71) Applicant: ZTE Corporation, Shenzhen, Guangdong 518057 (CN)
(72) Inventor: LIU, Yikang, Shenzhen, Guangdong 518057 (CN)
(74) Representative: Office Freylinger
(86) International application number: PCT/CN2010/077799
(87) International publication number: WO 2011/153768

(57) **Abstract**

The present invention discloses a method for transmitting data, a user equipment and a base station, wherein the method comprises: sending by user equipment data to a base station and indicating a receiver of the data is target user equipment residing on the base station; receiving the data and paging the target user equipment by the base station; and sending the data to the target user equipment by the base station after the target user equipment obtains a radio resource. With the present invention, the core network resources are saved.

## Description

### Field of the Invention

The present invention relates to the communication field, and in particular to a method for transmitting data, a user equipment, and a base station.

### Background of the Invention

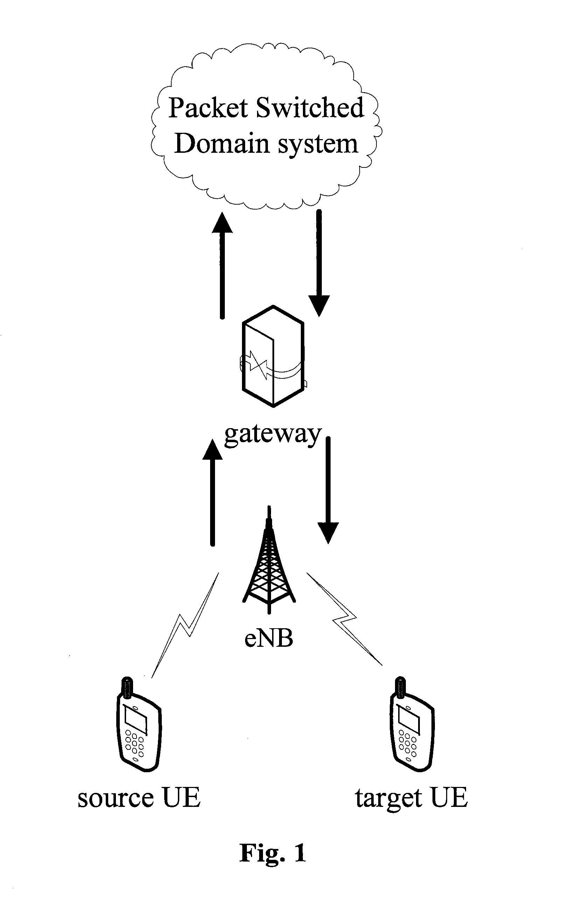

Currently, in Long-Term Evolution (abbreviated as LTE) system, the data interaction between user equipments (abbreviated as UE) needs to be performed via the core network. Fig. 1 is a schematic diagram of the data transmission between two UEs in an LTE network according to the related art, in which after registering with the core network and obtaining an IP address and being carried in an Evolved Packet System (abbreviated as EPS), one UE can transmit data with other UEs via the TCP/IP protocol, and this data transmission needs to be performed via the core network.

According to the currently available processing method, it is required that all the data must access to the core network from an access network during transmission and return back to the access network from the core network. Therefore, even if two UEs reside on the same station (abbreviated as eNB), they still need to perform data interaction via the core network, which thus increases the delay of data transmission and also wastes the network resources of the core network.

### Summary of the Invention

In the present invention, a solution for transmitting data is provided to solve the above problem at least.

A method for transmitting data is provided according to one aspect of the present invention, comprising: sending by a user equipment data to a base station and indicating that a receiver of the data is a target user equipment residing on the base station by a user equipment; receiving the data and paging the target user equipment by the base station; and sending the data to the target user equipment by the base station, after the target user equipment obtains a radio resource by the base station.

A user equipment is provided according to another aspect of the present invention, comprising: a first sending module for sending data to a base station and indicating that a receiver of the data is a target user equipment residing on the base station; a paging responding module for responding to the paging of the base station and acquiring a radio resource from the base station; and a first receiving module for receiving via the radio resource data which is sent by source user equipment residing on the base station and forwarded by the base station.

A base station is further provided according to another aspect of the present invention, comprising: a second receiving module for receiving data from a user equipment, wherein the user equipment indicates a receiver of the data is target user equipment residing on the base station; a paging module for paging the target user equipment; and a second sending module for sending the data to the target user equipment after the target user equipment obtains a radio resource.

With the present invention, a user equipment is used for sending data to a base station and indicating a receiver of this data is target user equipment residing on this base station; the base station receives the data and pages the target user equipment; and the base station sends the data to the target user equipment after the target user equipment obtains a radio resource. It solves the problem in the related art that the data transmission of the UEs residing on the same base station wastes core network resources, thus saves the resources of the core network and shortens the data transmission time.

### Brief Description of the Accompanying Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a schematic diagram of the data transmission between two UEs in an LTE network according to the related art;
Fig. 2 is a flow chart of a method for data transmission according to an embodiment of the present invention;
Fig. 3 is a block diagram of the structure of a user equipment according to an embodiment of the present invention;
Fig. 4 is a block diagram of a preferred structure of a user equipment according to an embodiment of the present invention;
Fig. 5 is a block diagram of the structure of a base station according to an embodiment of the present invention;
Fig. 6 is a block diagram of a preferred structure of a base station according to an embodiment of the present invention;
Fig. 7 is a Block Diagram II of a preferred structure of a base station according to an embodiment of the present invention;
Fig. 8 is a schematic diagram of the data transmission between UEs which access the same eNB according to Embodiment III of the present invention;
Fig. 9 is a flow chart of the data transmission between UEs which access the same eNB according to Embodiment II of the present invention;
Fig. 10 is a flow chart of a RRC layer signaling of the source UE sending the data to the eNB according to Embodiment III of the present invention;
Fig. 11 is a schematic diagram of the structure of a RRC data identification packet according to an embodiment of the present invention;
Fig. 12 is a schematic diagram of the structure of a RRC data load packet according to an embodiment of the present invention; and
Fig. 13 is a flow chart of a RRC layer signaling of an eNB sending the data sending to destination UE according to Embodiment III of the present invention.

### Detailed Description of the Embodiments

The embodiments of the present invention will be described hereinafter in detail in conjunction with the drawings thereof. It needs to be noted that the embodiments of the present invention and the features in the embodiments can be combined with each other if no conflict exists.

### Embodiment I

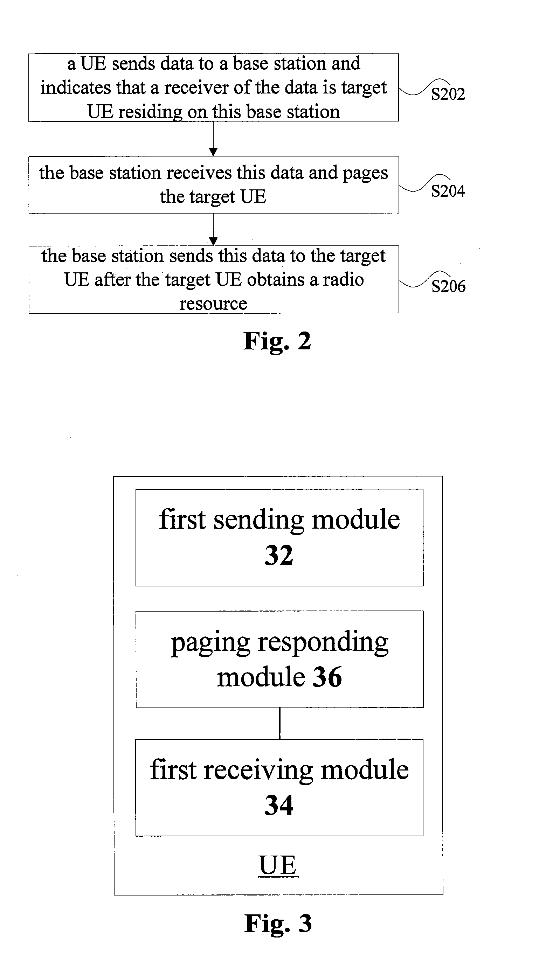

A method for transmitting data is provided in this embodiment. Fig. 2 is a flow chart of a method for data transmission according to an embodiment of the present invention. As shown in Fig. 2, this procedure includes the following steps:
Step S202: a UE sends data to a base station and indicates a receiver of the data is a target UE residing on this base station;
Step S204: the base station receives the data and pages the target UE; and
Step S206: the base station sends the data to the target UE after the destination UE obtains a radio resource.

By way of the above steps, two UEs residing on the same base station no longer need to use the core network during data transmission, thus shortening data transmission time and saving the core network resources.

Preferably, in this embodiment, the UE can firstly send a first data identification packet to the base station, wherein this first data identification packet carries the identification of the target UE and the number of packets to be sent. Then, the UE encapsulates the data to be sent into packets whose number is corresponding to the number of packets and sends them to the base station. For example, the number of packets to be sent can be the sum of the number of data identification packets and the number of all the packets of the data (for example, if the number of packets of the data to be sent is 100, then the value of this number of packets to be sent is 101). Of course, it is also possible that the number of packets to be sent is only be the number of packets of the data to be sent (such as 100).

It needs to be noted that the above preferred sending process can be used only when the UE sends data to the base station or only when the base station sends data to the target UE. For example, the base station sends a second data identification packet to the target UE, wherein the second data identification packet carries the identification of source UE and the number of packets to be sent; and the base station encapsulates the data from the source UE into packets whose number is corresponding to this number and sends them to the target UE. Alternatively, it can be used in both of these sending processes.

If the base station uses the sending method of data identification packet when sending data to the target UE, then the base station can directly send, after receiving the packet sent from the source UE, the received packet to the target UE, only by changing the identification of the target UE in the data identification packet to the identification of the source UE, without decapsulating the packet. Of course, the base station can decapsulate the packets according to the number of the packets in the data identification packet after receiving this data identification packet and stores the decapsulated data.

Preferably, the base station can judge whether the target UE resides on this base station before paging this target UE. If the judgment result is no, then it requires to send the data to this target UE via the core network; and if the judgment result is yes, then this target UE is paged. With this judgment mode, whether the target UE still resides on this base station can be determined before paging, so that it can avoid paging the UE which does not reside on this base station, thus saving resources. However, since such judgment mode is performed before paging, it will cause data transmission delay. Therefore, the data can be sent to the target UE via the core network after the base station fails to page the target user. Of course, these two judgment modes can be used simultaneously

A user equipment is provided in this embodiment as well. Fig. 3 is a block diagram of the structure of a user equipment according to an embodiment of the present invention As shown in Fig. 3, this UE comprises: a first sending module **32** and a first receiving module **34,** which will be described in the following.

The first sending module **32** is used for sending data to a base station and indicating that a receiver of the data is a target user equipment residing on the base station. A paging responding module **36** is used for responding to the paging of the base station and acquiring a radio resource from the base station. The first receiving module **34** being connected to the page responding module **36** is used for receiving the data which is sent by source user equipment residing on the base station and forwarded by the base station via the acquired radio resource.

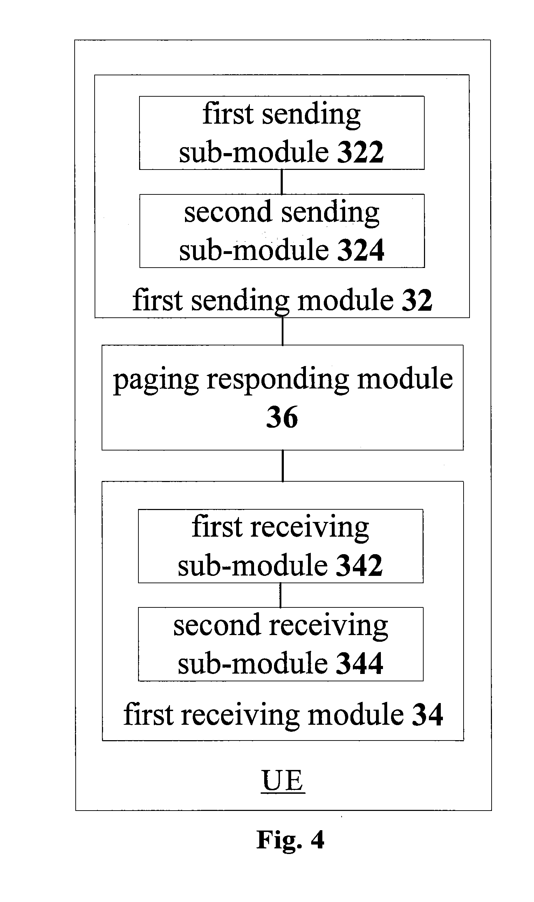

Fig. 4 is a block diagram of a preferred structure of a user equipment according to an embodiment of the present invention. As shown in Fig. 4, the first sending module **32** includes: a first sending sub-module **322** for sending a first data identification packet to a base station, wherein the first data identification packet carries the identification of target user equipment and the number of packets to be sent by the first sending module; and a second sending sub-module **324** for encapsulating the data to be sent to the target UE into packets whose number is corresponding to the number and sending them to the base station.

Preferably, the first receiving module **34** includes: a first receiving sub-module **342** for receiving a data identification packet sent by the base station, wherein the data identification packet carries the identification of the source user equipment and the number of packets to be sent; and a second receiving sub-module **344** for receiving packets which are sent by the base station and whose number is corresponding to the number of packets to be sent.

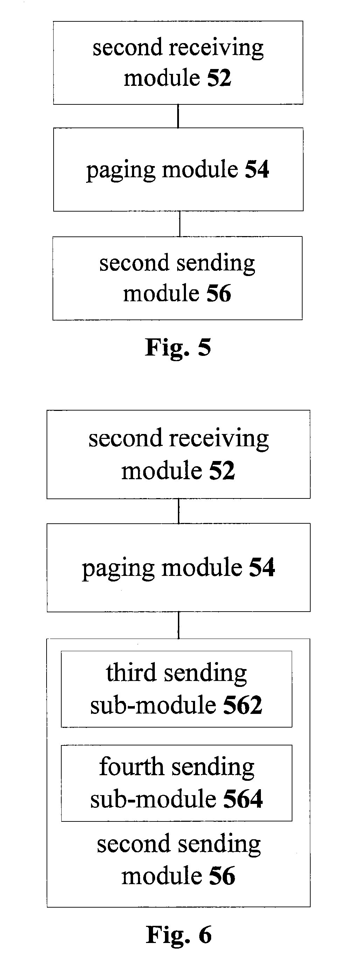

A base station is provided in this embodiment as well. Fig. 5 is a block diagram of the structure of a base station according to an embodiment of the present invention. As shown in Fig. 5, this base station comprises: a second receiving module **52,** a paging module **54,** and a second sending module **56.** This will be described in the following.

The second receiving module **52** is used for receiving data sent by a user equipment, wherein the user equipment indicates that a receiver of the data is a target user equipment residing on the base station. The paging module **54** connected to the second receiving module **52** is used for paging the target user equipment. The second sending module **56** connected to the paging module **54** is used for sending the data to the target user equipment after the target user equipment acquires a radio resource.

Fig. 6 is a block diagram of a preferred structure of a base station according to an embodiment of the present invention. As shown in Fig. 6, the second sending module 56 includes: a third sending sub-module 562 for sending a second data identification packet to the target user equipment, wherein the second data identification packet carries the identification of user equipment and the number of packets to be sent; and a fourth sending sub-module **564** for encapsulating the data into packets whose number is corresponding to the number and sending the packets to the target user equipment.

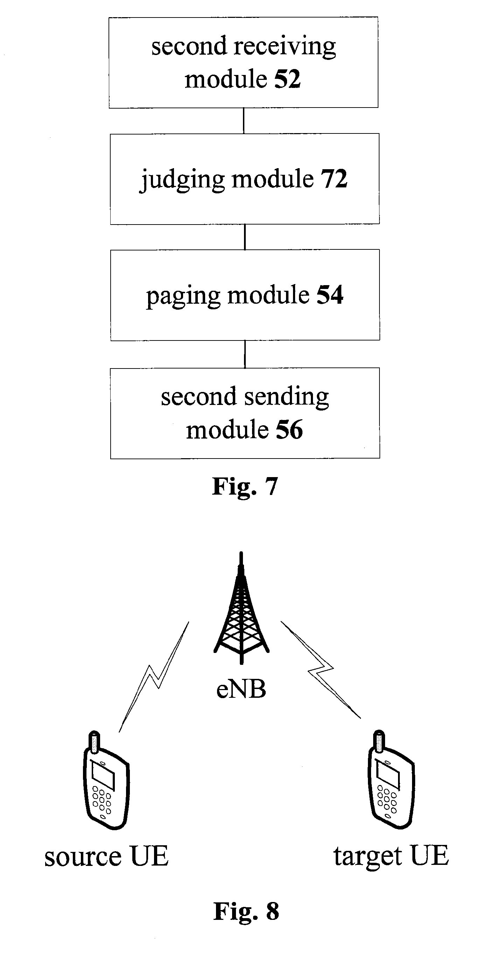

Fig. 7 is a Block Diagram II of a preferred structure of a base station according to an embodiment of the present invention, wherein the base station further comprises: a judging module **72** which is connected to the second receiving module **52** and the paging module **54** and used for judging whether the target user equipment resides on the base station. If the judgment result is no, then the second sending module **56** sends data to the target user equipment via the core network, and at this moment, it can be sent using the existing data sending mode; and if the judgment result is yes, then the paging module **54** pages the target user equipment.

Preferably, the judging module **72** is further used for judging whether the paging of the paging module is failed. If the paging is failed, then the second sending module sends data to the target user equipment via the core network.

### Embodiment II

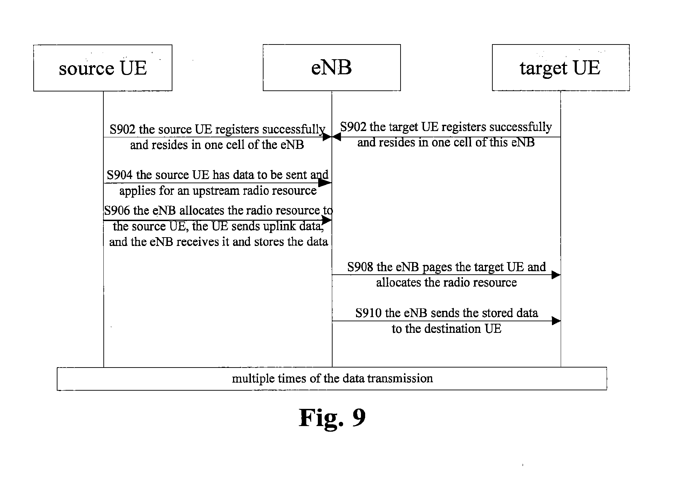

This preferred embodiment combines with the preferred implementation of the above embodiment I, and in this embodiment, a method for data transmission between UEs which access the same eNB is provided. Fig. 9 is a flow chart of data transmission between UEs which access the same eNB according to Embodiment II of the present invention, wherein the method comprises the following steps:
Step S902: two UEs access a network successfully and reside on one certain eNB.
Step S904: the UE (which can also be referred to as source UE) which needs to send data requests a radio resource from the eNB.
Step S906: the source UE sends data to the eNB and at the same time indicates the destination UE to which this data is to be sent, and eNB receives the data and stores the data.
Step S908: the eNB pages the destination UE, allocates the radio resource to the destination UE, and establishes a data path with the destination UE.
Step S910: the eNB sends the stored data to the destination UE.

The source UE can perform steps S904 to S910 for many times to transmit more data. When this process is performed for many times, there is no strict sequence for the steps of individual times and it can be performed step by step in flow.

This embodiment overcomes the problem that the data transmission between UEs which access the same eNB must be performed via the core network, thereby causing the delay to increase and the core network load to increase.

### Embodiment III

This preferred embodiment combines with the preferred implementation in the above Embodiment I. Fig. 8 is a schematic diagram of data transmission between UEs which access the same eNB according to Embodiment III of the present invention As shown in Fig. 8, only the two UEs which need to perform data transmission with each other and the eNB on which they reside are required to participate the data transmission process without the participation of the network elements in the core network, and the transmission of the data between the UEs only needs the eNB that the UEs reside on, but does not require the data to enter a plurality of network elements in the core network and then return to the eNB, thus greatly shortening data transmission time.

Two UEs access the network successfully and reside in one certain cell of one certain eNB. The process of UE accessing network and the process of residing can be performed in accordance with 3GPP related standard steps. When the UE to send data (referred to as source UE) needs to send data to the destination UE, it is required to first know the International Mobile Subscriber Identity (abbreviated as IMSI) of the destination UE. The process of acquiring the IMSI of the destination UE is not discussed in this embodiment. In this embodiment, it is supposed that the source UE has obtained the IMSI of the destination UE by one certain way (for example, the IMSI can be obtained by using the prior art). Of course, if the IMSI is not used to identify the destination UE in other systems or an improved system, then it is required to obtain the information for identifying the destination UE. Description will be made by taking one IMSI as the example in the following.

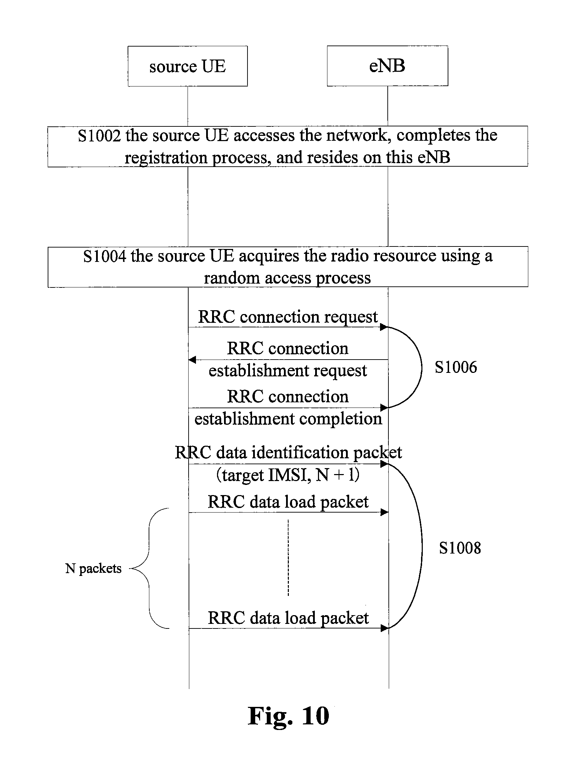

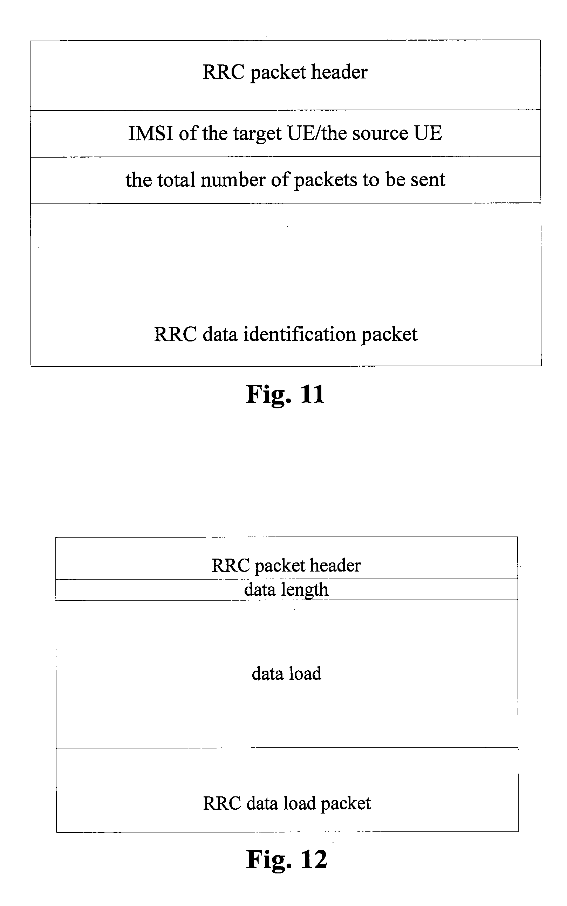

Fig. 10 is a flow chart of a RRC layer signaling of the source UE sending the data to the eNB according to Embodiment III of the present invention. As shown in Fig. 10, this procedure includes the following steps:
Step S 1002: the source UE accesses the network, completes the registration process, and resides on this eNB.
Step S1004: when the source UE has data to send to the destination UE with known IMSI, the source UE obtains a radio resource allocated by the eNB through a random access process.
Step S1006: the source UE sends a RRC connection request message to the eNB using the radio resource, the eNB replies a RRC connection establishment request message, and the source UE replies a RRC connection establishment completion message and establishes a RRC connection.
Step S1008: the source UE sends data to the eNB and at the same time indicates the destination UE to which this data will be sent and the eNB receives the data and stores the data. The source UE can encapsulate into a packet on the RRC layer the data to be sent and sends it to the eNB by using the previously established RRC connection. Here, it is needed to define two new types of RRC packets: RRC data identification packet and RRC data load packet, as shown in Figs. 11 and 12.

Fig. 11 is a schematic diagram of the structure of a RRC data identification packet according to an embodiment of the present invention, wherein the RRC packet further needs to contain two cells in addition to the RRC packet header: the IMSI of the destination UE and the number of RRC packets to be sent. The IMSI of the destination UE is an IMSI number with 15 decimal digitals for explaining to the eNB the destination UE to which the user data is be sent, so as to facilitate the eNB to subsequently page this destination UE to forward the data. The number of RRC packets to be sent is an integer, whose value can be set as required and should contain the number of RRC data identification packets. The minimum being 1 indicates that there is no RRC data load packet which encapsulates user data to be sent and only one RRC data identification packet is sent. If there are N RRC data load packets which encapsulate user data to be sent, then this value should be (N + 1).

Fig. 12 is a schematic diagram of the structure of a RRC data load packet according to an embodiment of the present invention, wherein the RRC packet further needs to encapsulate therein the user data to be sent in addition to the RRC packet header. Therefore, two cells of data length and data load are included. The data length, an integer, records in byte the length of the data encapsulated in this RRC data load packet. The data load cell stores the data to be sent.

The source UE firstly sends one RRC data identification packet which contain two cells: the IMSI of the destination UE and the number of RRC packets to be sent. Then, the source UE encapsulates wholly or in segmentation manner into the RRC data load packets the data to be sent according to the lengths of the data to be sent and sends them into the eNB one by one.

After receiving the first RRC data identification packet sent by the source UE, the eNB reads the IMSI of the destination UE and the number of the RRC data packets to be received from the first RRC data identification packet, and then decapsulates the subsequent RRC data load packets which are received from the source UE and whose number is the above number subtracting one, and stores the encapsulated data therein.

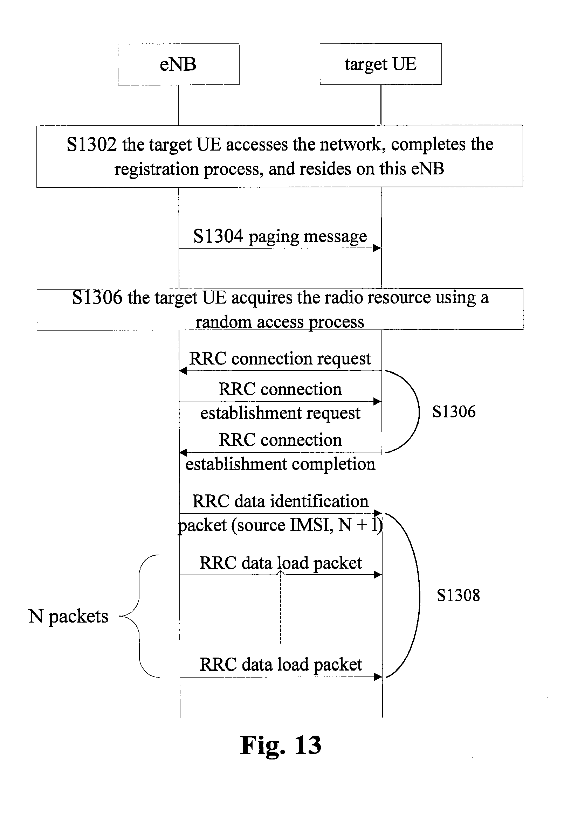

Fig. 13 is a flow chart of a RRC layer signaling of an eNB sending the data to the destination UE according to Embodiment III of the present invention, and this procedure includes the following steps:
Step S 1302: the destination UE accesses the network, completes the registration process, and resides on this eNB.
Step S1304: the eNB pages the destination UE, wherein the eNB broadcasts one paging message to all the cells, and the IMSI number of the destination UE is contained therein. If the base station does not receive a response from the destination UE for a predetermined duration after sending the paging message, then the base station deems that the paging is failed and the data can be sent to the destination UE via the core network.
Step S1306: after receiving the data, the destination UE initiates a random access process and obtains a radio resource.
Step S1308: the destination UE sends a RRC connection request message to the eNB using this radio resource. The eNB replies a RRC connection establishment request message, and the destination UE replies a RRC connection establishment completion message and a RRC connection is established.
Step S 1310: the eNB sends the stored data to the destination UE. Using the previously established RRC connection, the eNB encapsulates the stored data received from the source UE into a RRC packet and sends it to the destination UE. The RRC data identification packet and the RRC data load packet are also used here.

In the above, the eNB firstly sends one RRC data identification packet, which contains the following two cells: the IMSI of the source UE and the number of RRC packets to be sent, the number being the sum of the number of the RRC data identification packet contained and the number of RRC data load packets which are subsequently used to encapsulate the data to be sent. Then, the eNB encapsulates wholly or in segmentation manner into the RRC data load packets the data to be sent according to the lengths of the data to be sent and sends them into the destination UE one by one. The packets sent by the eNB to the destination UE will still be encapsulated according to the encapsulation mode of the source UE, and the number of the RRC data load packets to be sent is the same as the number of the packets that the source UE sends to the eNB.

After receiving the first RRC data identification packet sent by the eNB, the destination UE reads from the first RRC data identification packet the IMSI of the source UE and the number of the RRC data packets to be received, and then decapsulates the subsequent RRC data load packets which are received from the eUE and whose number is the above number subtracting one,, and takes out the encapsulated data therefrom.

The source UE can perform the steps in Fig. 10 for many times to transmit more data. When this process is performed for many times, there is no strict sequence for the steps of individual times and it can be performed step by step in flow. For example, after sending data to the eNB for the first time, the source UE may start to send data to the eNB for the second time before the eNB sends the data to the destination UE.

In summary, the above embodiments solve the problem in the related art that the data transmission of the UEs residing on the same base station wastes core network resources, thus saving the resources of the core network and shortening the data transmission time.

Apparently, those skilled in the art shall understand that the above modules and steps of the present invention can be realized by using general purpose calculating device, and they can be integrated into one calculating device or distributed on a network which consists of a plurality of calculating devices, and alternatively they can be realized by using the executable program codes of the calculating device, so that consequently they can be stored in the storing device and executed by the calculating device, in some cases, can perform the shown or described step in sequence other than herein, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art. The scope defined in the present invention shall cover any modification, equivalent substitution and improvement within the spirit and principle of the present invention.

## Claims

1. A method for transmitting data, **characterized by** comprising:
sending by a user equipment data to a base station and indicating that a receiver of the data is a target user equipment residing on the base station;
receiving the data and paging the target user equipment by the base station; and
sending the data to the target user equipment by the base station, after the target user equipment obtains a radio resource.

2. The method according to claim 1, **characterized in that** the step of sending by the user equipment data to the base station and indicating that a receiver of the data is the target user equipment residing on the base station comprises:
sending a first data identification packet to the base station by the user equipment, wherein the first data identification packet carries the identification of the target user equipment and the number of packets to be sent; and
encapsulating by the user equipment the data into packets whose number is corresponding to said number and sending them to the base station.

3. The method according to claim 2, **characterized in that** after the step of sending the data to the base station by the user equipment, it further comprises:
receiving by the base station the packets whose number is corresponding to said number and decapsulating them; and
storing by the base station the decapsulated data.

4. The method according to any one of claims 1 to 3, **characterized in that** the step of sending the data to the target user equipment by the base station comprises:
sending a second data identification packet to the target user equipment by the base station, wherein the second data identification packet carries the identification of the user equipment and the number of packets to be sent; and
encapsulating the data into packets whose number is corresponding to said number and sending them to the target user equipment by the base station.

5. The method according to claim 1, **characterized in that** the base station judge whether the target user equipment resides on the base station, wherein if the judgment result is no, then the base station send the data to the target user equipment via a core network; and if the judgment result is yes, then the base station page the target user equipment.

6. The method according to claim 1 or 5, **characterized in that** if the base station fails to page the target user equipment, then the base station send the data to the target user equipment via the core network.

7. A user equipment, **characterized by** comprising:
a first sending module for sending data to a base station and indicating that a receiver of the data is a target user equipment residing on the base station;
a page responding module for responding to the paging of the base station and acquiring a radio resource from the base station; and
a first receiving module for receiving via the radio resource the data which is sent by a source user equipment residing on the base station and forwarded by the base station.

8. The user equipment according to claim 7, **characterized in that** the first sending module comprises:
a first sending sub-module for sending a first data identification packet to the base station, wherein the first data identification packet carries the identification of the target user equipment and the number of packets to be sent by the sending module; and
a second sending sub-module for encapsulating the data into packets whose number is corresponding to said number and sending them to the base station.

9. A base station, **characterized by** comprising:
a second receiving module for receiving data from a user equipment, wherein the user equipment indicates a receiver of the data is a target user equipment residing on the base station;
a paging module for paging the target user equipment; and
a second sending module for sending the data to the target user equipment after the target user equipment obtains a radio resource.

10. The base station according to claim 9, **characterized in that** the second sending module comprises:
a third sending sub-module for sending a second data identification packet to the target user equipment, wherein the second data identification packet carries the identification of the user equipment and the number of packets to be sent; and
a fourth sending sub-module for encapsulating the data into packets whose number is corresponding to said number and sending them to the target user equipment.
